# EUROPEAN PATENT APPLICATION

(11) **EP 2 444 746 A1**
(43) Date of publication of application: **25.04.2012**
(21) Application number: 10188120.9
(22) Date of filing: 19.10.2010
(51) Int. Cl.: F24D 3/14, F28F 1/22, F28F 13/18, F28F 21/06, E04F 13/08

(54) **Heating system with improved heat transfer between tubing and plates**

(71) Applicant: DizaynGrup Teknoloji Arastirma ve Gelistirme Ltd., 34220 Istanbul (TR)
(72) Inventor: Koca, Ali Ihsan, 34220 Istanbul (TR); Gemici, Zafer, 34220 Istanbul (TR); Teke, Ismail, 34349 Istanbul (TR)
(74) Representative: Sevinç, Erkan

(57) **Abstract**

The objects of the invention are achieved through use of a heat exchange system comprising a panel with respective tubing slots, said panel being made out of an insulation material, said system further comprising a plastic-based tubing placed within said slots such that a metal foil is wrapped around the tubing in between the same and the radiation plates, said radiation plates extending over a surface on both sides of the tubing to cover a finished floor, wall or ceiling portion. A further filling material also having adhesive properties is efficient in eliminating presence of air in between two metallic surfaces, i.e. the radiation plate and the metallic layer around the tubing.

## Description

### Technical Field of the Invention

The present invention relates to panel elements of a heating system, such elements comprising metal radiation plates associated with lateral support means holding the pipes in place in thermal communication with said radiation plate.

### Background of the Invention / Prior Art

The present invention relates to a panel radiator structure. As the heating/cooling fluid travels through body of a heat exchanger having heating or cooling loops with tubing provided with hot or cold water, heat transfer is effected such that panels held in the floor, walls or ceiling of a room radiate heat to the room by means of a metal radiation plate. The pipes being conventionally secured in the panels in close thermal relationship with said radiation plate and covered by a finished floor, wall or ceiling of the room then spread heat over the finished floor, wall or ceiling of the room.

Heating systems of the above-referred type typically require a supply of hot water from a boiler and appropriate means for regulating the temperature of the water from the supply. Water is typically fed to the heating loops, i.e. tubing and heating arrangements.

The panel elements generally comprises metal radiation plates associated with lateral support means holding the pipes in place in thermal communication with the radiation plate. The plate is heated by conduction of heat from the loops so that it radiates heat to the room by its radiating surface.

A prominent prior art publication in the field is US 5931381 disclosing a plurality of aligned modular heating and/or cooling panels attached to the floor, each panel containing a metal radiation plate and each holding a length of the same tubing, the tubing being inserted into an accommodation in the panel and held therein in intimate thermal contact with the plate. The assembly of panels with tubing inserted is covered with a floor portion.

The present invention on the other hand provides a heat exchange system in which water is circulated through pipes having a first metallic outer layer associated with a radiation plate in thermal communication with finished floor, wall or ceiling of the room. Efficiency of the heat transfer is optimized with the metallic outer layer of the tubing such that an increased heat flux is achieved.

### Objects of the Invention

One of the objects of the present invention is to provide a modular panel having optimum thermal efficiency in association with the structural layout of the tubing, radiation plate, insulation and filling material.

A further object of the present invention is to provide a tubing having an outer layer effective in decreasing thermal resistance and increase heat flux in between the tubing and the radiation plate.

Still a further object of the present invention is to provide a more effective heat transfer between the tubing and the radiation plates such that thinner radiation plates can be employed to reduce costs.

Still a further object of the present invention is to provide a homogeneous heat distribution over the finished floor, wall or ceiling of the room.

### Summary of the Invention

The objects of the invention are achieved through use of a heat exchange system comprising a panel with respective tubing slots, said panel being made out of an insulation material, said system further comprising a plastic-based tubing placed within said slots such that a metal foil is wrapped around the tubing in between the same and the radiation plates, said radiation plates extending over a surface on both sides of the tubing to cover a finished floor, wall or ceiling portion. A further filling material also having adhesive properties is efficient in eliminating presence of air in between two metallic surfaces, i.e. the radiation plate and the metallic layer around the tubing.

### Brief Description of the Figures

Accompanying figures are given solely for the purpose of schematically exemplifying the concept of the present invention.
Figure 1 is a perspective schematic demonstration of a heat transfer panel system tubing according to the present invention.

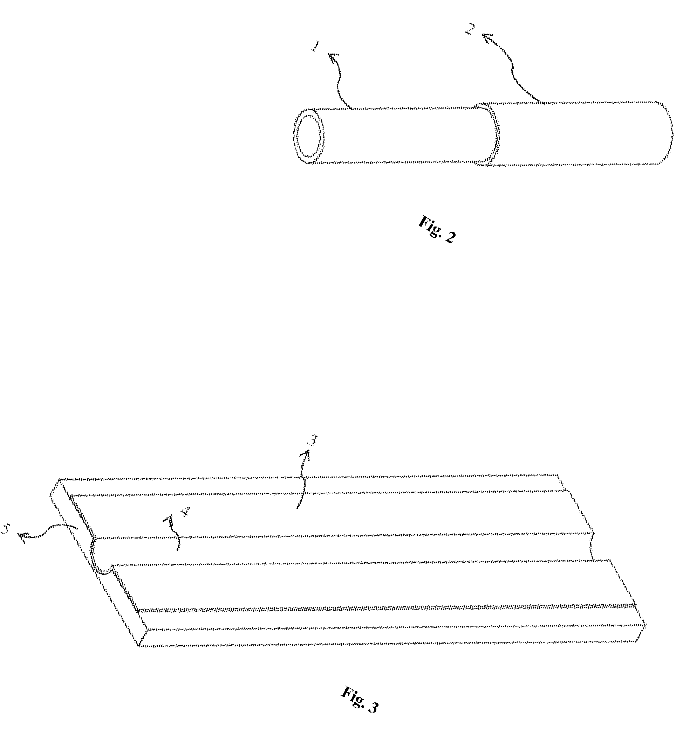

Figure 2 is a perspective schematic demonstration of a tubing element according to the present invention.
Figure 3 is a perspective schematic demonstration of a panel portion for receiving the tubing according to the present invention.

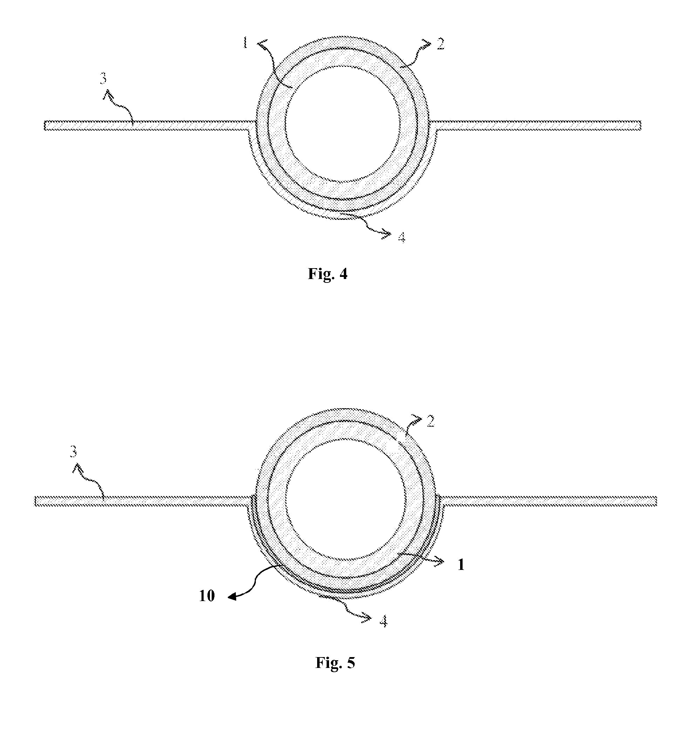

Figure 4 is a schematic 2-dimensional demonstration of the tubing with the panel.
Figure 5 is a schematic 2-dimensional demonstration of the tubing with the panel where a filling material is present in between the tubing and the radiation plate.
Figure 6 is a schematic 2-dimensional demonstration of the tubing with the panel structured a floor heating panel.
Figure 7 is a schematic 2-dimensional demonstration of the tubing with the panel structured a wall-mounted panel.

### Detailed Description of the Invention

The present invention proposes a system in which a supply of hot or cold water from a boiler and means for regulating the temperature of the water from the supply is present such that water is typically fed to the heating or cooling loops for circulation. The above-referred components of the heating system are not detailed here for the sake of conciseness. On the other hand, the skilled persons would easily appreciate functioning of every single unit in such a conventional heat exchange system.

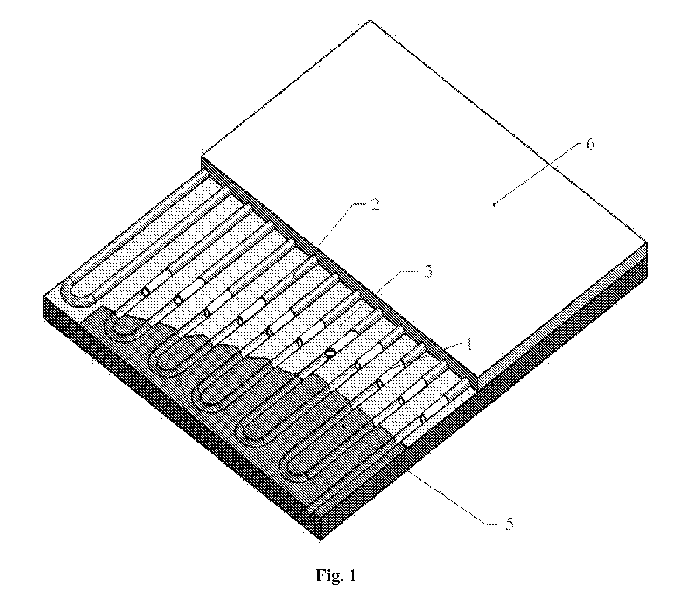

The heat exchange system typically comprises a panel with respective tubing slots (4). A plurality of tubing elements (1) are placed within said slots (4) such that a continuous web of tubing elements (1) is obtained as seen in Fig. 1. It is to be understood that various loop layouts are possible and widely practiced in the art.

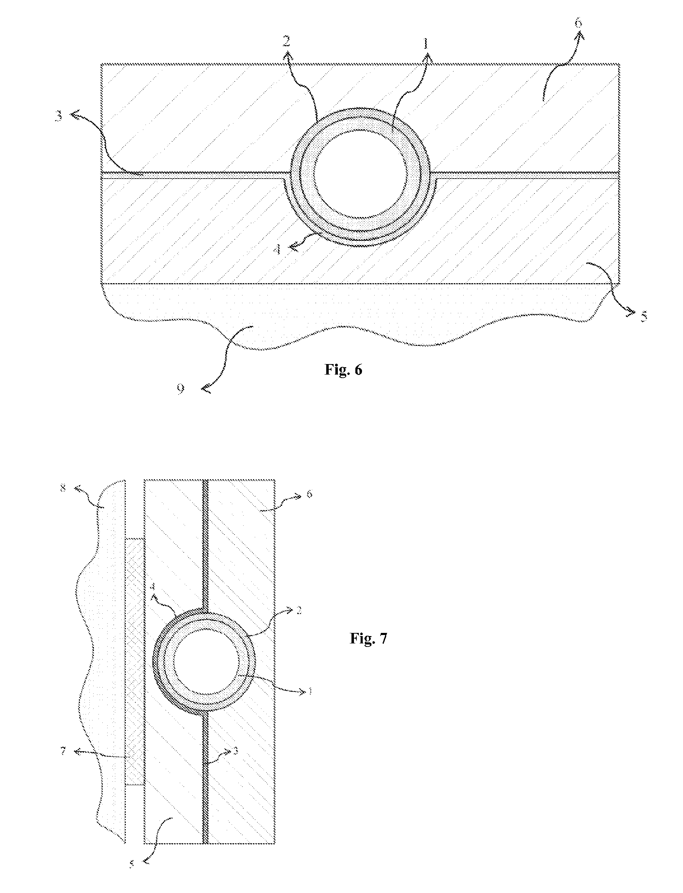

Said panel are made out of an insulation material (5) accommodating the tubing elements (1). Said panels are positioned between the space to be heated, i.e. a room and a constructional portion of the room such as floor, wall or ceiling. Fig. 7 and Fig. 6 respectively demonstrate position of the panels with respect to a vertical constructional part, i.e. a wall (8) and a horizontal constructional part such as the floor (9).

The tubing (1) of said heat exchange system according to the present invention is a plastic-based tubing (1). A metal foil (2) is wrapped around the tubing (1) in between the same and a radiation plate (3), said radiation plate (3) extending over a surface on both sides of the tubing (1) to cover a finished floor, wall or ceiling portion. The radiation plate (3) is typically arranged to extend on both sides of the tubing (1) around an intermediate portion where said plate (3) follows the contour of said tubing (1). In other words the radiation plate (3) longitudinally encloses half of the circumferential surface of the tubing (1).

A filling material (10) also having adhesive properties is applied in between two metallic surfaces, i.e. the radiation plate (3) and the metallic layer (2) around the tubing (1). This is especially advantageous in that a better heat flux is obtained while at the same time eliminating entrapped air thereinbetween. The filling material is further useful in eliminating damage to the radiation plate (3) as the plastic-based tubing (1) expands or contracts due to thermal fluctuations. This will also eliminate noise associated with expansion and contraction to a certain extent as an additional effect.

In the event that wall mounting structure is applied, a series of structural support members (7) can be used.

The radiation plates (3) are normally placed behind a plurality of filling blocks (6) facing the inner space to be heated. To this end a panel structure comprises the tubings (1) having an outer metallic layer (2), a filler material (10) therearound in between the metallic layers (2) and the radiation plates' (3) centrally extending longitudinal section and the filler blocks (6) neighboring the inner space to be heated.

In sum, the present invention proposes a panel structure associated with a heat exchange system comprising a plastic-based tubing (1) loop positioned in a heat insulating material (5) and a radiation plate (3) having a first centrally extending longitudinal part following the contour of the half of the circumferential surface of the tubing (1) and a second planar part extending on both sides of said central part. Said tubing (1) has an outer metallic layer (2) and a filler material (10) applied in between said metallic layer (2) and said first centrally extending longitudinal part of said radiation plate (3).

## Claims

1. A panel structure associated with a heat exchange system comprising a plastic-based tubing (1) loop positioned in a heat insulating material (5) and a radiation plate (3) having a first centrally extending longitudinal part following the contour of at least part of the circumferential surface of the tubing (1) and a second planar part extending on both sides of said central part **characterized in that** said tubing (1) has an outer metallic layer (2) and a filler material (10) applied in between said metallic layer (2) and said first centrally extending longitudinal part of said radiation plate (3).

2. A panel structure as set forth in Claim 1 wherein said panel structure further comprises filler blocks (6) extending over said radiation plates (3) and neighboring the space to be heated.

3. A panel structure as set forth in Claim 1 or 2 wherein said tubing elements (1) are placed within slots (4) on said panel structure such that a continuous web of tubing elements (1) is obtained.

4. A panel structure as set forth in Claim 1 or 3 wherein said radiation plates (3) and said metal foil (2) are of Aluminum material.

5. A panel structure as set forth in Claim 1 or 4 wherein said filler material (10) has adhesive properties.
